(19) Europäisches Patentamt
European Patent Office
Office européen des brevets

(11) **EP 2 435 728 B1**

(12) **EUROPÄISCHE PATENTSCHRIFT**

(45) Veröffentlichungstag und Bekanntmachung des Hinweises auf die Patenterteilung:
**10.07.2013 Patentblatt 2013/28**

(21) Anmeldenummer: **10726407.9**

(22) Anmeldetag: **25.05.2010**

(51) Int Cl.:
*F16H 3/72* (2006.01)          *F03D 11/02* (2006.01)
*H02K 7/116* (2006.01)          *H02P 9/48* (2006.01)
*H02K 7/18* (2006.01)

(86) Internationale Anmeldenummer:
**PCT/AT2010/000182**

(87) Internationale Veröffentlichungsnummer:
**WO 2010/135754 (02.12.2010 Gazette 2010/48)**

(54) **ENERGIEGEWINNUNGSANLAGE, INSBESONDERE WINDKRAFTANLAGE**

ENERGY GENERATION PLANT, IN PARTICULAR WIND POWER PLANT

INSTALLATION DE PRODUCTION D'ÉNERGIE, EN PARTICULIER UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **25.05.2009 AT 8052009**

(43) Veröffentlichungstag der Anmeldung:
**04.04.2012 Patentblatt 2012/14**

(73) Patentinhaber: **Hehenberger, Gerald**
**9020 Klagenfurt (AT)**

(72) Erfinder: **Hehenberger, Gerald**
**9020 Klagenfurt (AT)**

(74) Vertreter: **Beer & Partner Patentanwälte KG**
**Lindengasse 8**
**1070 Wien (AT)**

(56) Entgegenhaltungen:
**WO-A1-00/17543**

**Beschreibung**

Die Erfindung betrifft eine Energiegewinnungsanlage, insbesondere Windkraftanlage, mit einer Antriebswelle, einem Generator und mit einem Differenzialgetriebe mit drei An- bzw. Abtrieben, wobei ein erster Antrieb mit der Antriebswelle, ein Abtrieb mit einem Generator und ein zweiter Antrieb mit einem Differenzial-Antriebverbunden ist, wobei das Differenzialgetriebe auf einer Seite des Generators und der Differenzial-Antrieb auf der anderen Seite des Generators angeordnet ist, und wobei das Differenzialgetriebe mit dem Differenzial-Antrieb mittels einer durch den Generator verlaufenden Welle verbunden ist.

Eine derartige Energiegewinnungsanlage ist aus der WO 00/17543 A1 bekannt, und dieses Dokument bildet den nächstliegenden Stand der Technik.

Windkraftwerke gewinnen zunehmend an Bedeutung als Elektrizitätserzeugungsanlagen. Dadurch erhöht sich kontinuierlich der prozentuale Anteil der Stromerzeugung durch Wind. Dies wiederum bedingt einerseits neue Standards bezüglich Stromqualität und andererseits einen Trend zu noch größeren Windkraftanlagen. Gleichzeitig ist ein Trend Richtung Off-shore-Windkraftanlagen erkennbar, welcher Anlagengrößen von zumindest 5MW installierter Leistung fordert. Durch die hohen Kosten für Infrastruktur und Wartung bzw. Instandhaltung der Windkraftanlagen im Offshore-Bereich gewinnen hier sowohl Wirkungsgrad als auch Herstellkosten der Anlagen, mit dem damit zusammenhängenden Einsatz von Mittelspannungs-Synchrongeneratoren, eine besondere Bedeutung.

Die WO2004/109157 A1 zeigt ein komplexes, hydrostatisches "Mehrwege"-Konzept mit mehreren parallelen Differenzialstufen und mehreren schaltbaren Kupplungen, wodurch zwischen den einzelnen Wegen geschaltet werden kann. Mit der gezeigten technischen Lösung können die Leistung und somit die Verluste der Hydrostatik reduziert werden. Ein wesentlicher Nachteil ist jedoch der komplizierte Aufbau der gesamten Einheit.

Die EP 1283359 A1 zeigt ein 1-stufiges und ein mehrstufiges Differenzialgetriebe mit elektrischem Differenzial-Antrieb, wobei die 1-stufige Version eine um die Eingangswelle koaxial positionierte Sonder-Drehstrommaschine mit hoher Nenndrehzahl aufweist, welche aufgrund der Bauform ein extrem hohes auf die Rotorwelle bezogenes Massenträgheitsmoment hat. Alternativ wird ein mehrstufiges Differenzialgetriebe mit schnelllaufender Standard-Drehstrommaschine vorgeschlagen, welche parallel zur Eingangswelle des Differenzialgetriebes ausgerichtet ist.

Diese technischen Lösungen erlauben zwar den direkten Anschluss von Mittelspannungs-Synchrongeneratoren ans Netz (d.h. ohne Einsatz von Frequenzumrichtern), die Nachteile bekannter Ausführungen sind jedoch einerseits hohe Verluste im Differenzial-Antrieb bzw. andererseits bei Konzepten die dieses Problem lösen, komplexe Mechanik bzw. Sonder-Elektromaschinenbau und damit hohe Kosten. Generell ist festzustellen, dass kostenrelevante Kriterien, wie z.B. optimale Integration der Differenzialstufe in den Triebstrang der Windkraftanlage, nicht ausreichend berücksichtigt wurden.

Aufgabe der Erfindung ist oben genannte Nachteile soweit wie möglich zu vermeiden und einen Differenzial-Antrieb zur Verfügung zu stellen, welcher neben geringen Kosten auch gute Einbindung in den Triebstrang der Windkraftanlage gewährleistet.

Gelöst wird diese Aufgabe erfindungsgemäß dadurch, dass das Differenzialgetriebe schrägverzahnt ist und dass im Bereich eines differenzialgetriebeseitigen Endes des Generators ein Axialkräfte aufnehmendes Lager angeordnet ist, welches die Axialkräfte des zweiten Antriebs aufnimmt.

Dadurch ist eine sehr kompakte und effiziente Bauweise der Anlage möglich, mit der darüber hinaus auch keine wesentlichen Zusatzbelastungen für den Generator der Energieerzeugungsanlage, insbesondere Windkraftanlage, verursacht werden.

Bevorzugte Ausführungsformen der Erfindung sind Gegenstand der Unteransprüche.

Nachfolgend werden bevorzugte Ausführungsformen der Erfindung unter Bezugnahme auf die angeschlossenen Zeichnungen detailliert beschrieben.

Fig. 1 zeigt das Prinzip eines Differenzialgetriebes mit einem elektrischen Differenzial-Antrieb gemäß Stand der Technik.

Fig. 2 zeigt eine erfindungsgemäße Ausführungsform einer Differenzialstufe im Zusammenhang mit vorliegender Erfindung.

Fig. 3 zeigt eine erfindungsgemäße Ausführungsform eines Triebstranges mit Differenzialantrieb mit einem Stufenplaneten.

Fig. 4 zeigt die Lagerung der Welle im Bereich der vorderen bzw. getriebeseitigen Lagerung des Generators von Fig. 3 in vergrößertem Maßstab.

Die Leistung des Rotors einer Windkraftanlage errechnet sich aus der Formel

$$\text{Rotor-Leistung} = \text{Rotorfläche} * \text{Leistungsbeiwert} * \text{Windgeschwindigkeit}^3 * \text{Luftdichte} / 2$$

wobei der Leistungsbeiwert abhängig von der Schnelllaufzahl (= Verhältnis Blattspitzen-Geschwindigkeit zu Windgeschwindigkeit) des Rotors der Windkraftanlage ist. Der Rotor einer Windkraftanlage ist für einen optimalen Leistungsbeiwert basierend auf einer im Zuge der Entwicklung festzulegenden Schnelllaufzahl (meist ein Wert zw. 7 und 9) ausgelegt. Aus diesem Grund ist beim Betrieb der Windkraftanlage im Teillastbereich eine entsprechend kleine Drehzahl einzustellen, um einen optimalen aerodynamischen Wirkungsgrad zu gewährleisten.

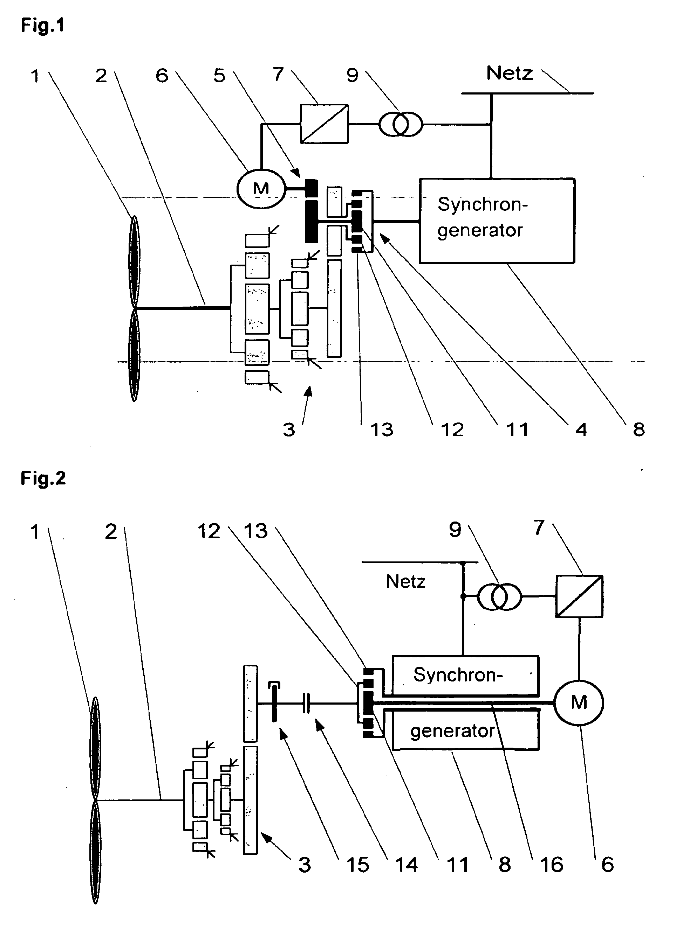

Fig. 1 zeigt ein mögliches Prinzip eines Differenzialsystems für eine Windkraftanlage bestehend aus Differenzialstufe 4 bzw. 11 bis 13, einer Anpassungs-Getriebestufe 5 und einem elektrischen Differenzial-Antrieb 6. Der Rotor 1 der Windkraftanlage, der auf der Antriebswelle 2 für das Hauptgetriebe 3 sitzt, treibt das Hauptgetriebe 3 an. Das Hauptgetriebe 3 ist ein 3-stufiges Getriebe mit zwei Planetenstufen und einer Stirnradstufe. Zwischen Hauptgetriebe 3 und Generator 8 befindet sich die Differenzialstufe 4, welche vom Hauptgetriebe 3 über Planetenträger 12 der Differenzialstufe 4 angetrieben wird. Der Generator 8 - vorzugsweise ein fremderregter Mittelspannungs-Synchrongenerator - ist mit dem Hohlrad 13 der Differenzialstufe 4 verbunden und wird von diesem angetrieben. Das Ritzel 11 der Differenzialstufe 4 ist mit dem Differenzial-Antrieb 6 verbunden. Die Drehzahl des Differenzial-Antriebes 6 wird geregelt, um einerseits bei variabler Drehzahl des Rotors 1 eine konstante Drehzahl des Generators 8 zu gewährleisten und andererseits das Drehmoment im kompletten Triebstrang der Windkraftanlage zu regeln. Um die Eingangsdrehzahl für den Differenzial-Antrieb 6 zu erhöhen wird im gezeigten Fall ein 2-stufiges Differenzialgetriebe gewählt, welches eine Anpassungs-Getriebestufe 5 in Form einer Stirnradstufe zwischen Differenzialstufe 4 und Differenzial-Antrieb 6 vorsieht. Differenzialstufe 4 und Anpassungs-Getriebestufe 5 bilden somit das 2-stufige Differenzialgetriebe. Der Differenzial-Antrieb ist eine Drehstrommaschine, welche über einen Frequenzumrichter 7 und einen Transformator 9 ans Netz angeschlossen wird. Alternativ kann der Differenzial-Antrieb auch als z.B. hydrostatische Pumpen/Motor-Kombination ausgeführt werden. In diesem Fall ist die zweite Pumpe vorzugsweise über eine Anpassungs-Getriebestufe mit der Antriebswelle des Generators 8 verbunden.

Die Drehzahlgleichung für das Differenzialgetriebe lautet:

$$\text{Drehzahl}_{\text{Generator}} = x * \text{Drehzahl}_{\text{Rotor}} + y * \text{Drehzahl}_{\text{Differenzial-Antrieb}},$$

wobei die Generatordrehzahl konstant ist, und sich die Faktoren x und y aus den gewählten Getriebeübersetzungen von Hauptgetriebe und Differenzialgetriebe ableiten lassen.

Das Drehmoment am Rotor wird durch das anstehende Windangebot und den aerodynamischen Wirkungsgrad des Rotors bestimmt. Das Verhältnis zwischen dem Drehmoment an der Rotorwelle und dem am Differenzial-Antrieb ist konstant, wodurch sich das Drehmoment im Triebstrang durch den Differenzial-Antrieb regeln lässt. Die Drehmomentgleichung für den Differenzial-Antrieb lautet:

$$\text{Drehmoment}_{\text{Differenzial-Antrieb}} = \text{Drehmoment}_{\text{Rotor}} * y / x,$$

wobei der Größenfaktor y/x ein Maß für das notwendige Auslegungs-Drehmoment des Differenzial-Antriebes ist.

Die Leistung des Differenzial-Antriebes ist im Wesentlichen proportional dem Produkt aus prozentueller Abweichung der Rotordrehzahl von dessen Grunddrehzahl mal Rotor-Leistung. Dementsprechend erfordert ein großer Drehzahlbereich grundsätzlich eine entsprechend große Dimensionierung des Differenzial-Antriebes.

Fig. 2 zeigt eine erfindungsgemäße Ausführungsform eines einstufigen Differenzialgetriebes 11 bis 13. Der Rotor 1, der auf der Antriebswelle 2 für das Hauptgetriebe 3 sitzt, treibt das Hauptgetriebe 3 an und dieses über Planetenträger 12 das Differenzialgetriebe 11 bis 13. Der Generator 8 ist mit dem Hohlrad 13 des Differenzialgetriebes verbunden und das Ritzel 11 mittels einer Welle 16 mit dem Differential-Antrieb 6. Der Differenzial-Antrieb 6 ist eine Drehstrommaschine, welche über den Frequenzumrichter 7 und den Transformator 9 ans Netz angeschlossen wird. Der Differential-Antrieb 6 liegt in koaxialer Anordnung sowohl zur Abtriebswelle des Hauptgetriebes 3, als auch zur Antriebswelle des Generators 8. Die Antriebswelle des Generators 8 ist eine Hohlwelle, welche erlaubt, dass der Differential-Antrieb 6 an der vom Differentialgetriebe 11 bis 13 abgewandten Seite des Generators 8 positioniert wird und mittels einer Welle 16 verbunden ist. Dadurch ist das Differenzialgetriebe 11 bis 13 vorzugsweise eine separate, an den Generator 8 angebundene Baugruppe, welche dann vorzugsweise über eine Kupplung 14 und eine Bremse 15 mit dem Hauptgetriebe 3 verbunden ist. Die im Differenzial-Antrieb 6 gelagerte Welle 16 kann z.B. als Stahlwelle ausgeführt sein.

Wesentliche Vorteile der gezeigten koaxialen, 1-stufigen Ausführungsform sind (a) die konstruktive Einfachheit und die Kompaktheit des Differentialgetriebes 11 bis 13, (b) der dadurch hohe Wirkungsgrad des Differential-Getriebes und (c) die optimale Integration des Differnzialgetriebes in den Triebstrang der Windkraftanlage.

Darüber hinaus kann das Differentialgetriebe 11 bis 13 als separate Baugruppe gefertigt und unabhängig vom Hauptgetriebe implementiert und gewartet werden. Der Differential-Antrieb 6 kann natürlich auch hier durch einen hydrostatischen Antrieb ersetzt werden, wozu jedoch ein zweites, mit dem hydrostatischen Differential-Antrieb in Wechselwirkung stehendes Pumpenelement vorzugsweise durch die mit dem Generator 8 verbundene Getriebe-Abtriebswelle angetrieben werden muss.

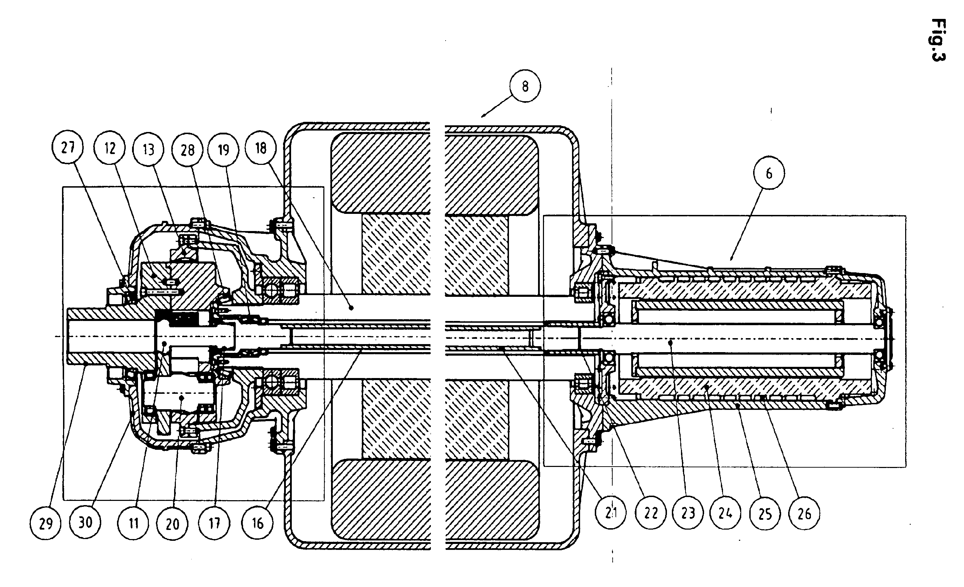

Fig. 3 zeigt eine Ausführungsform eines Triebstranges mit einem Differenzialgetriebe 11 bis 13 mit Stufenplaneten 20. Wie schon in Fig. 2 wird auch hier der Differenzial-Antrieb 6 vom Ritzel 11 über eine Welle 16 angetrieben. Das Ritzel 11 ist vorzugsweise mittels einer Zahnwellenverbindung 17 mit der Welle 16 verbunden. Die Welle 16 ist im Bereich des getriebeseitigen Endes, im Folgenden dem sogenannten D-Ende, des Generators 8 in der Generator-Hohlwelle 18 mittels eines Lagers 19 einfach gelagert. Alternativ kann die Welle 16 auch mehrfach z.B. in der Generatorwelle gelagert sein.

Vorzugsweise besteht die Welle 16 im Wesentlichen aus einer Hohlwelle 21 und den Zahnwellenverbindungen 17 und 22, welche mit der Hohlwelle 21 verbunden sind. Die Hohlwelle 21 ist vorzugsweise ein Rohr aus Stahl, oder in einer besonders steifen bzw. massenträgheitsmomentarmen Ausführung aus Faserverbundwerkstoff mit z.B. Kohle - oder Glasfaser.

Am differenzialantriebsseitigen Ende, im Folgenden dem sogenannten ND-Ende, des Generators 8 ist der Differenzial-Antrieb 6 befestigt. Dieser Differenzial-Antrieb 6 ist vorzugsweise eine permanentmagneterregte Synchronmaschine mit einem massenträgheitsmomentarmen Rotor 23, einem Stator 24 mit integrierten, in Umfangsrichtung angeordneten Kanälen 26 für die Wassermantelkühlung und einem Gehäuse 25. Diese Kanäle 26 können alternativ auch im Gehäuse 25, bzw. sowohl im Stator 24 als auch im Gehäuse 25 integriert sein. Das Wellenende des Rotors 23 trägt das Gegenstück zur Zahnwellenverbindung 22. Damit ist dieses Wellenende der Welle 16 über den Rotor 23 gelagert. Alternativ kann dieses Wellenende der Welle 16 auch in der Generator-Hohlwelle 18 gelagert werden.

Die Rotorwelle 18 des Generators 8 wird vom Hohlrad 13 angetrieben. Die im Planetenträger 12, der im Ausführungsbeispiel von Fig. 3 zweiteilig ausgeführt ist, vorzugsweise zweifach gelagerten Planeten - im gezeigten Beispiel drei an der Zahl - sind sogenannte Stufenplaneten 20. Diese bestehen jeweils aus zwei drehfest miteinander verbunden Zahnrädern mit unterschiedlichem Teilkreisdurchmesser und vorzugsweise unterschiedlicher Verzahnungsgeometrie. Das Hohlrad 13 ist im gezeigten Beispiel mit dem im Durchmesser kleineren Zahnrad des Stufenplaneten 20 im Eingriff, und das Ritzel 11 mit dem zweiten Zahnrad des Stufenplaneten 20. Da über das Hohlrad 13 wesentlich höhere Drehmomente übertragen werden müssen als über das Ritzel 11, ist die Zahnbreite für dieses wesentlich größer als die für das Ritzel 11. Aus Gründen der Lärmreduktion wird die Verzahnung des Differenzialgetriebes als Schrägverzahnung ausgeführt. Vorzugsweise werden die individuellen Schrägungswinkel der Verzahnungteile des Stufenplaneten so gewählt, dass keine resultierende Axialkraft auf die Lagerung des Stufenplaneten wirkt. Abhängig von der Ausrichtung der Schrägverzahnung wird die Welle 16 im Normalbetrieb entweder auf Zug oder auf Druck belastet. Bei diversen Sonderlastfällen dreht die Richtung der Axialkraft temporär um.

Der mehrteilige Planetenträger 12 ist im gezeigten Beispiel ebenfalls zweifach mittels Lager 27, 28 gelagert, um die am Wellenende 29 auftretenden Kräfte besser ins Getriebegehäuse 30 ableiten zu können. Alternativ ist hier auch ein sogenannter einseitig gelagerter Planetenträger einsetzbar, welcher nur eine ausreichend dimensionierte Lagerung im Bereich des Lagers 27 hat, womit die Lagerung im Bereich des Lagers 28 entfallen kann.

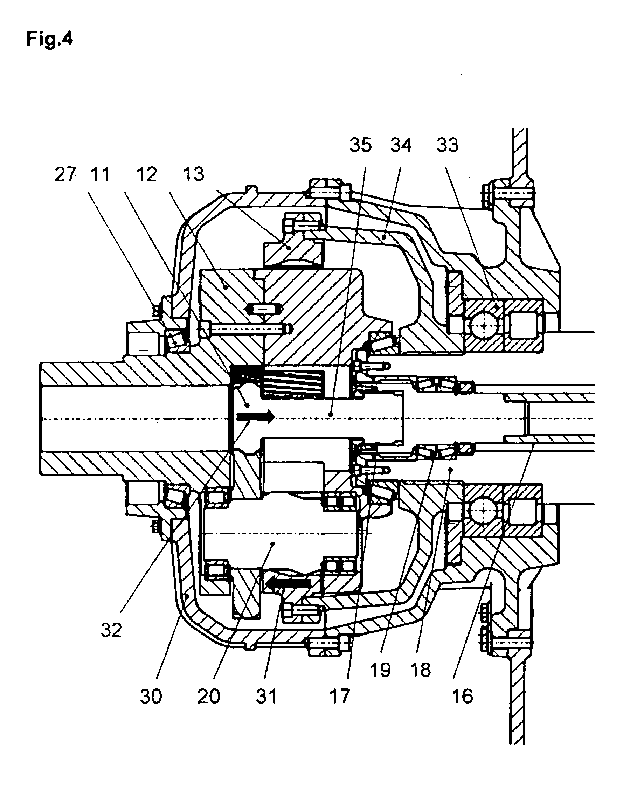

Fig. 4 zeigt detailliert eine erfindungsgemäße Ausführungsvariante der Lagerung der Welle 16 im Bereich der getriebeseitigen Lagerung des Generators. Das schrägverzahnte Differenzialgetriebe ist aufgebaut wie bereits in Fig. 3 beschrieben und besteht aus Hohlrad 13, zweiteiligem Planetenträger 12, Stufenplaneten 20 und Ritzel 11. Durch die Schrägverzahnung entsteht am Hohlrad 13 eine Axialkraft 31 und eine dieser gegengerichtete Axialkraft 32 am Ritzel 11. Diese Axialkräfte 31, 32 haben für den Differenzial-Antrieb einer 3MW Windkraftanlage im Nennbetrieb eine Größenordnung von jeweils etwa 12kN. Um zu verhindern, dass der Axialkraft-Ausgleich vom Ritzel 11 über die Welle 16, den Differenzial-Antrieb 6, das Gehäuse des Generators 8 und das Generatorlager 33 auf die Generatorwelle 18 mit Hohlradträger 34 und Hohlrad 13 wirkt, wird das Lager 19 als sogenanntes Festlager ausgeführt, welches sämtliche auf die Welle 16 wirkenden Axialkräfte aufnimmt und direkt in die Generatorwelle 18 einleitet. Um die radiale Bewegungsfreiheit des Ritzels 11 dadurch nicht einzuschränken, ist die Ritzelwelle 35 mittels der axial gesicherten Zahnwellenverbindung 17 mit der Welle 16 verbunden.

Mit dieser technischen Lösung werden drei wesentliche Vorteile erzielt. Dies sind (a) die lange, schnell drehende Welle 16 ist frei von Axialkräften 32, (b) das Ritzel 11 kann sich radial frei einstellen und (c) die Lagerung des Generators 8 kann ebenfalls frei von Axialkräften 31 bzw. 32 ausgelegt werden, da die Axialkräfte nun direkt über das Lager 19, Generatorwelle 18 und Hohlradträger 34 wirken.

**EP 2 435 728 B1**

Der Vollständigkeit halber sei hier erwähnt, dass die genannten Vorteile auch für eine Differenzialstufe mit einfachen Planeten - d.h. keine Stufenplaneten - gelten.

**Patentansprüche**

1. Energiegewinnungsanlage, insbesondere Windkraflanlage, mit einer Antriebswelle, einem Generator (8) und mit einem Differenzialgetriebe (11 bis 13) mit drei An- bzw. Abtrieben, wobei ein erster Antrieb mit der Antriebswelle, ein Abtrieb mit einem Generator (8) und ein zweiter Antrieb mit einem Differenzial-Antrieb (6) verbunden ist, wobei das Differenzialgetriebe (11 bis 13) auf einer Seite des Generators (8) und der Differenzial-Antrieb (6) auf der anderen Seite des Generators angeordnet ist, und wobei das Differenzialgetriebe (11 bis 13) mit dem Differenzial-Antrieb (6) mittels einer durch den Generator (8) verlaufenden Welle (16) verbunden ist, **dadurch gekennzeichnet, dass** das Differenzialgetriebe (11 bis 13) schrägverzahnt ist und dass im Bereich eines differenzialgetriebeseitigen Endes des Generators (8) ein Axialkräfte aufnehmendes Lager (19) angeordnet ist, welches die Axialkräfte des zweiten Antriebs aufnimmt.

2. Energiegewinnungsanlage nach Anspruch 1, **dadurch gekennzeichnet, dass** das Lager (19) ein Festlager ist.

3. Energiegewinnungsanlage nach Anspruch 1 oder 2, **dadurch gekennzeichnet, dass** das Lager (19) an einer Generatorwelle (18) angeordnet ist.

4. Energiegewinnungsanlage nach einem der Ansprüche 1 bis 3, **dadurch gekennzeichnet, dass** die Welle (16) mittels des Lagers (19) gelagert ist.

5. Energiegewinnungsanlage nach einem der Ansprüche 1 bis 4, **dadurch gekennzeichnet, dass** das Differenzialgetriebe (11 bis 13) ein Planetengetriebe ist.

6. Energiegewinnungsanlage nach Anspruch 5, **dadurch gekennzeichnet, dass** Planetenräder (20) des Planetengetriebes (4) jeweils zwei Zahnräder aufweisen, welche miteinander drehfest verbunden sind und unterschiedliche Teilkreisdurchmesser aufweisen.

7. Energiegewinnungsanlage nach einem der Ansprüche 5 bis 6, **dadurch gekennzeichnet, dass** der zweite Antrieb eine Ritzelwelle (35) des Planetengetriebes (4) ist, welche mit der Welle (16) mittels einer Zahnwellenverbindung (17) verbunden ist.

8. Energiegewinnungsanlage nach einem der Ansprüche 5 bis 7, **dadurch gekennzeichnet, dass** ein Hohlrad (13) des Planetengetriebes (4) fest mit Generatorwelle (18) verbunden ist.

9. Energiegewinnungsanlage nach einem der Ansprüche 1 bis 8, **dadurch gekennzeichnet, dass** die Welle (16) über eine Zahnwellenverbindung (22) im Rotor (23) des Differenzial-Antriebs (6) gelagert ist.

10. Energiegewinnungsanlage nach einem der Ansprüche 1 bis 8, **dadurch gekennzeichnet, dass** die Welle (16) im differenzialantriebsseitigen Ende der Generatorwelle (18) gelagert ist.

11. Energiegewinnungsanlage nach einem der Ansprüche 1 bis 10, **dadurch gekennzeichnet, dass** die Welle (16) eine Hohlwelle (21) aufweist.

12. Energiegewinnungsanlage nach einem der Ansprüche 1 bis 11, **dadurch gekennzeichnet, dass** der Differenzial-Antrieb (6) koaxial zur Welle des Generators (8) angeordnet ist.

13. Energiegewinnungsanlage nach einem der Ansprüche 1 bis 12, **dadurch gekennzeichnet, dass** die Antriebswelle die Rotorwelle (2) einer Windkraftanlage ist.

14. Energiegewinnungsanlage nach einem der Ansprüche 1 bis 13, **dadurch gekennzeichnet, dass** der Differenzial-Antrieb (6) eine elektrische Maschine ist.

15. Energiegewinnungsanlage nach einem der Ansprüche 1 bis 13, **dadurch gekennzeichnet, dass** der Differenzial-Antrieb (6) ein hydraulischer, insbesondere ein hydrostatischer, Antrieb ist.

**Claims**

1. Energy generation plant, in particular a wind power plant, with a drive shaft, a generator (8), and with a differential gear (11 to 13) with three drives and outputs, respectively, whereby a first drive is connected to the drive shaft, one output to a generator (8), and a second drive to a differential drive (6), whereby the differential gear (11 to 13) is arranged on one side of the generator (8) and the differential drive (6) is arranged on the other side of the generator, and whereby the differential gear (11 to 13) is connected to the differential drive (6) by means of a shaft (16) that runs through the generator (8), **characterized in that** the differential gear (11 to 13) is a helical gear and **in that** a bearing (19) absorbing axial forces is arranged in the region of an end of the generator (8) that is on the differential gear side, and said bearing absorbs the axial forces of the second drive.

2. Energy generation plant according to claim 1, **characterized in that** the bearing (19) is a fixed bearing.

3. Energy generation plant according to claim 1 or 2, **characterized in that** the bearing (19) is arranged on a generator shaft (18).

4. Energy generation plant according to one of claims 1 to 3, **characterized in that** the shaft (16) is mounted by means of the bearing (19).

5. Energy generation plant according to one of claims 1 to 4, **characterized in that** the differential gear (11 to 13) is a planetary gear.

6. Energy generation plant according to claim 5, **characterized in that** planetary wheels (20) of the planetary gear (4) in each case have two gears, which are connected to one another in a torque-proof manner and have different reference diameters.

7. Energy generation plant according to one of claims 5 or 6, **characterized in that** the second drive is a pinion gear shaft (35) of the planetary gear (4), which is connected to the shaft (16) by means of a splined shaft connection (17).

8. Energy generation plant according to one of claims 5 to 7, **characterized in that** a hollow wheel (13) of the planetary gear (4) is connected tightly to the generator shaft (18).

9. Energy generation plant according to one of claims 1 to 8, **characterized in that** the shaft (16) is mounted via a splined shaft connection (22) in the rotor (23) of the differential drive (6).

10. Energy generation plant according to one of claims 1 to 8, **characterized in that** the shaft (16) is mounted in the differential-drive-side end of the generator shaft (18).

11. Energy generation plant according to one of claims 1 to 10, **characterized in that** the shaft (16) has a hollow shaft (21).

12. Energy generation plant according to one of claims 1 to 11, **characterized in that** the differential drive (6) is arranged coaxially to the shaft of the generator (8).

13. Energy generation plant according to one of claims 1 to 12, **characterized in that** the drive shaft is the rotor shaft (2) of a wind power plant.

14. Energy generation plant according to one of claims 1 to 13, **characterized in that** the differential drive (6) is an electrical machine.

15. Energy generation plant according to one of claims 1 to 13, **characterized in that** the differential drive (6) is a hydraulic drive, in particular a hydrostatic drive.


**Revendications**

1. Installation de production d'énergie, en particulier éolienne, avec un arbre primaire, un générateur (8) et avec un engrenage différentiel (11 à 13) avec trois entrées et/ou sorties, une première entrée étant reliée à l'arbre primaire, une sortie à un générateur (8) et une deuxième entrée à un entraînement de différentiel (6), l'engrenage différentiel (11 à 13) étant disposé sur un côté du générateur (8) et l'entraînement de différentiel (6) sur l'autre côté du générateur, et l'engrenage différentiel (11 à 13) étant relié à l'entraînement de différentiel (6) à l'aide d'un arbre (16) s'étendant à travers le générateur (8), **caractérisée en ce que** l'engrenage différentiel (11 à 13) présente une denture hélicoïdale et **en ce qu'**un palier (19) absorbant des forces axiales est disposé dans la zone d'une extrémité du côté de l'engrenage différentiel du générateur (8), lequel palier absorbe les forces axiales de la deuxième entrée.

2. Installation de production d'énergie selon la revendication 1, **caractérisée en ce que** le palier (19) est un palier fixe.

3. Installation de production d'énergie selon la revendication 1 ou 2, **caractérisée en ce que** le palier (19) est disposé sur un arbre de générateur (18).

4. Installation de production d'énergie selon l'une des revendications 1 à 3, **caractérisée en ce que** l'arbre (16) est logé à l'aide du palier (19).

5. Installation de production d'énergie selon l'une des revendications 1 à 4, **caractérisée en ce que** l'engrenage différentiel (11 à 13) est un engrenage planétaire.

6. Installation de production d'énergie selon la revendication 5, **caractérisée en ce que** des roues satellites (20) de l'engrenage planétaire (4) présentent respectivement deux roues dentées, lesquelles sont reliées ensemble de manière solidaire en rotation et présentent différents diamètres de cercle primitif.

7. Installation de production d'énergie selon l'une des revendications 5 à 6, **caractérisée en ce que** la deuxième entrée est un arbre à pignon (35) de l'engrenage planétaire (4), lequel est relié à l'arbre (16) à l'aide d'une liaison par cannelures (17).

8. Installation de production d'énergie selon l'une des revendications 5 à 7, **caractérisée en ce qu'**une roue intérieure (13) de l'engrenage planétaire (4) est reliée de manière fixe à l'arbre de générateur (18).

9. Installation de production d'énergie selon l'une des revendications 1 à 8, **caractérisée en ce que** l'arbre (16) est logé via une liaison par cannelures (22) dans le rotor (23) de l'entraînement de différentiel (6).

10. Installation de production d'énergie selon l'une des revendications 1 à 8, **caractérisée en ce que** l'arbre (16) est logé dans l'extrémité du côté d'entraînement de différentiel de l'arbre de générateur (18).

11. Installation de production d'énergie selon l'une des revendications 1 à 10, **caractérisée en ce que** l'arbre (16) présente un arbre creux (21).

12. Installation de production d'énergie selon l'une des revendications 1 à 11, **caractérisée en ce que** l'entraînement de différentiel (6) est disposé coaxialement à l'arbre du générateur (8).

13. Installation de production d'énergie selon l'une des revendications 1 à 12, **caractérisée en ce que** l'arbre primaire est l'arbre de rotor (2) d'une éolienne.

14. Installation de production d'énergie selon l'une des revendications 1 à 13, **caractérisée en ce que** l'entraînement de différentiel (6) est une machine électrique.

15. Installation de production d'énergie selon l'une des revendications 1 à 13, **caractérisée en ce que** l'entraînement de différentiel (6) est un entraînement hydraulique, en particulier hydrostatique.

**Fig.1**

**Fig.2**

EP 2 435 728 B1

**Fig.3**

9

EP 2 435 728 B1

**Fig.4**

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0017543 A1
- WO 2004109157 A1
- EP 1283359 A1